# EUROPEAN PATENT SPECIFICATION

(11) **EP 3 711 282 B1**
(45) Date of publication and mention of the grant of the patent: **06.03.2024**
(21) Application number: 19733937.7
(22) Date of filing: 19.04.2019
(51) Int. Cl.: H04W 8/02

(54) **METHOD AND APPARATUS FOR SUBSCRIPTION UPDATE**
VERFAHREN UND VORRICHTUNG ZUR ABONNEMENTAKTUALISIERUNG
PROCÉDÉ ET APPAREIL DE MISE À JOUR D'INSCRIPTION

(30) Priority: 29.01.2019 WO PCT/CN2019/073663
(43) Date of publication of application: 23.09.2020
(73) Proprietor: Telefonaktiebolaget LM Ericsson (publ), 164 83 Stockholm (SE)
(72) Inventor: LONG, Hongxia, Shanghai 200335 (CN)
(74) Representative: Ericsson
(86) International application number: PCT/CN2019/083430
(87) International publication number: WO 2020/155414

(56) References cited:
- CN-A- 103 618 800
- CN-A- 108 696 374
- US-A1- 2013 212 227
- "3rd Generation Partnership Project; Technical Specification Group Core Network and Terminals; 5G System; Unified Data Management Services; Stage 3 (Release 15)", 3GPP DRAFT; 29503-F21, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 22 December 2018 (2018-12-22), XP051686750, Retrieved from the Internet: URL:http://www.3gpp.org/ftp/3guInternal/3G PP%5Fultimate%5Fversions%5Fto%5Fbe%5Ftrans posed/sentToDpc/29503%2Df21%2Ezip [retrieved on 2018-12-22]
- HUAWEI ET AL: "Pseudo CR on TS 23.502 to resolve editor's note on event filters", 3GPP DRAFT; S2-179120-PCR-23502EN_EVENTFILTER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Ljubljana, Slovenia; 20171023 - 20171027 4 December 2017 (2017-12-04), XP051379980, Retrieved from the Internet: URL:http://www.3gpp.org/ftp/tsg%5Fsa/WG2%5 FArch/TSGS2%5F124%5FReno/Docs/ [retrieved on 2017-12-04]
- NOKIA: "Discussion on UDM / UDR function split", 3GPP DRAFT; C4-181177 UDM UDR FUNCTION SPLIT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. Gothenburg, SWEDEN; 20180122 - 20180126 12 January 2018 (2018-01-12), XP051384012, Retrieved from the Internet: URL:http://www.3gpp.org/ftp/tsg%5Fct/WG4%5 Fprotocollars%5Fex%2DCN4/TSGCT4%5F82%5FGot henburg/Docs/ [retrieved on 2018-01-12]
- "5G; 5G System; Network function repository services; Stage 3 (3GPP TS 29.510 version 15.2.0 Release 15)", ETSI Technical Specification, European Telecommunications Standards Institute (ETSI), 650, route des Lucioles ; F-06921 Sophia-Antipolis ; France, vol. 3GPP CT, no. V15.2.0, 19 December 2018 (2018-12-19), pages 1-113, XP014344724, 650, route des Lucioles ; F-06921 Sophia-Antipolis ; France
- "5G; 5G System; Unified Data Management Services; Stage 3 (3GPP TS 29.503 version 15.2.1 Release 15)", ETSI Technical Specification, European Telecommunications Standards Institute (ETSI), 650, route des Lucioles ; F-06921 Sophia-Antipolis ; France, vol. 3GPP CT, no. V15.2.1, 10 April 2019 (2019-04-10), pages 1-173, XP014344712, 650, route des Lucioles ; F-06921 Sophia-Antipolis ; France

## Description

### TECHNICAL FIELD

The non-limiting and exemplary embodiments of the present disclosure generally relate to the technical field of communications, and specifically to methods and apparatuses for **subscription** update.

### BACKGROUND

This section introduces aspects that may facilitate a better understanding of the disclosure. Accordingly, the statements of this section are to be read in this light and are not to be understood as admissions about what is in the prior art or what is not in the prior art.

In a communication network, a network node may subscribe to a notification of event occurrence by means of a subscription service operation, and/or unsubscribe to the notification by means of an unsubscription service operation, and/or get notified when a subscribed event occurs by means of a notification service operation. For example, in the fifth generation core network (5GC) of 3rd Generation Partnership Project (3GPP), UDM (Unified Data Management) network function provides an event exposure service, Nudm_EventExposure Service, as described in clause 5.5 of 3GPP TS 29.503 V15.21.

For the Nudm_EventExposure service, the following service operations are defined in clause 5.5.2.1 of 3GPP TS 29.503 V15.2.1: Subscribe, Unsubscribe and Notify.

The Nudm_EventExposure service may be used by consumer network functions (NFs) (e.g. network exposure function (NEF) or Service Capability Exposure Function (SCEF)) to subscribe to notifications of event occurrence by means of a Subscribe service operation. For events that can be detected by AMF (Access and mobility Function), the UDM makes use of the appropriate AMF service operation to subscribe on behalf of the consumer NF (e.g. NEF). The Nudm_EventExposure service is also used by the consumer NFs (e.g. NEF or SCEF) that have previously subscribed to notifications, to unsubscribe by means of an Unsubscribe service operation. For events that can be detected by the AMF, the UDM makes use of the appropriate AMF service operation to unsubscribe on behalf of the consumer NF (e.g. NEF or SCEF). The Nudm_EventExposure service is also used by the subscribed consumer NFs (e.g. NEF or SCEF) to get notified by the UDM when a subscribed event occurs at the UDM by means of a Notify service operation. Clauses 5.5.2.2, 5.5.2.3 and 5.5.2.4 of 3GPP TS 29.503 V15.2.1 describe the details of the Subscribe service operation, the Unsubscribe service operation, the Notify service operation respectively.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

As described in clause 5.5 of 3GPP TS 29.503 V15.2.1, with regard to the event subscription, only two service operations (Subscribe and Unsubscribe) are provided by UDM. For example, in the Subscribe operation as described in clause 5.5.2.2 of 3GPP TS 29.503 V15.2.1, an NF service consumer (e.g. NEF or SCEF) sends a Hyper Text Transfer Protocol (HTTP) POST request to create a subscription as present in a message body. On success, UDM responds with "201 Created" with the message body containing a representation of the created subscription. The Location HTTP header shall contain the uniform resource identifier (URI) of the created subscription. In the unsubscribe operation as described in clause 5.5.2.3 of 3GPP TS 29.503 V15.2.1, the NF service consumer sends a request to UDM to unsubscribe from notifications of event occurrence. The request contains the URI previously received in the Location HTTP header of the response to the subscription. There may be a problem in the Nudm_EventExposure Service: updating to the created event subscription is not possible in Nudm_EventExposure Service, which will block update operations on monitoring events and corresponding report options. For example, when the NF service consumer wants to make a change of the monitoring events in the created event subscription, for example, adding a new monitoring event into the event subscription, removing a monitoring event from the event subscription, updating an attribute of a monitoring event in the event subscription, updating expiry time of an event reporting option for the event subscription, updating a max number of reports of the event reporting option, etc., the Nudm_EventExposure Service can't be fulfilled.

To overcome or mitigate at least one above mentioned problems or other problems or provide a useful solution, the embodiments of the present disclosure propose an update solution. The update of the event subscription is introduced for the service consumer to update the event subscription after it has been created. The update of the event subscription may comprise at least one of adding a new monitoring event into the event subscription, removing a monitoring event from the event subscription, updating an attribute of a monitoring event in the event subscription, updating expiry time of an event reporting option for the event subscription, and updating a max number of reports of the event reporting option.

According to the present disclosure, methods, apparatuses and a computer-readable storage medium according to the independent claims are provided. Developments are set forth in the dependent claims.

In a first aspect of the disclosure, there is provided a method at a UDM, Unified Data Management, network function node providing an event exposure service, Nudm_EventExposure Service, according to claim 1.

In an embodiment, the updating may comprise at least one of adding a new monitoring event into the event subscription, removing a monitoring event from the event subscription, updating an attribute of a monitoring event in the event subscription, updating expiry time of an event reporting option for the event subscription, and updating a max number of reports of the event reporting option.

In an embodiment, the first request may be a Hyper Text Transfer Protocol (HTTP) PATCH or PUT request; and/or the updating result comprises a first HTTP status code.

In an embodiment, the first HTTP status code comprises one of 200 OK, 204 No Content, 403 Forbidden, 404 Not Found.

In an embodiment, when the updating of the event subscription is successful, the first HTTP status code may be set as 200 OK or 204 No Content, when the event subscription does not exist, the first HTTP status code is set as 404 Not Found, and when the updating can not be accepted, the first HTTP status code is set as 403 Forbidden.

In an embodiment, the first request may include a user equipment identity representing a single user equipment (UE) or a group of UEs or any UE, and a subscription identity identifying the event subscription.

In an embodiment, the first response may further include the updated event subscription or error information.

In an embodiment, the method according to the first aspect of the disclosure may further comprise receiving a second request for creating the event subscription from the second network function node and sending a second response including a creating result to the second network function node .

In an embodiment, the second request may be a Hyper Text Transfer Protocol (HTTP) POST request and the creating result comprises a second HTTP status code.

In an embodiment, the first network function node and the second network function node may be network function nodes of a wireless communication system.

In an embodiment, the first network function node may comprise Unified Data Management (UDM); and/or the second network function node may comprise a network exposure node.

In a second aspect of the disclosure, there is provided a method at a second network function according to claim 7.

In an embodiment, the updating may comprise at least one of adding a new monitoring event into the event subscription, removing a monitoring event from the event subscription, updating an attribute of a monitoring event in the event subscription, updating expiry time of an event reporting option for the event subscription, and updating a max number of reports of the event reporting option.

In an embodiment, the first request may be a Hyper Text Transfer Protocol (HTTP) PATCH or PUT request; and/or the updating result comprises a first HTTP status code.

In an embodiment, the first HTTP status code may comprise one of 200 OK, 204 No Content, 403 Forbidden, 404 Not Found.

In an embodiment, when the updating of the event subscription is successful, the first HTTP status code may be set as 200 OK or 204 No Content, when the event subscription does not exist, the first HTTP status code is set as 404 Not Found, and when the updating can not be accepted, the first HTTP status code is set as 403 Forbidden.

In an embodiment, the first request may include a user equipment identity representing a single user equipment (UE) or a group of UEs or any UE, and a subscription identity identifying the event subscription.

In an embodiment, the first response may further include the updated event subscription or error information.

In an embodiment, the method according to the second aspect may further comprise sending a second request for creating the event subscription to the first network function node and receiving a second response including a creating result from the first network function node.

In an embodiment, the second request may be a Hyper Text Transfer Protocol (HTTP) POST request and the creating result comprises a second HTTP status code.

In an embodiment, the first network function node and the second network function node may be network function nodes of a wireless communication system.

In an embodiment, the first network function node may comprise Unified Data Management (UDM); and/or the second network function node may comprise a network exposure node.

In a third aspect of the disclosure, there is provided an apparatus at UDM, Unified Data Management, network function node providing an event exposure service, Nudm_EventExposure Service, according to claim 13.

In a fourth aspect of the disclosure, there is provided an apparatus at a second network function node according to claim 14.

In a fifth aspect of the disclosure, there is provided a computer-readable storage medium storing instructions which, when executed on at least one processor, cause the at least one processor to carry out the method according to the first and second aspect of the disclosure.

The embodiments of the present disclosure propose a new solution to support the update of the created event subscription, so the requirements from service consumer for updating the created event subscription can be fulfilled. The embodiments of the present disclosure can support update of the monitoring events in the created event subscription and update of the reporting options for the event notifications in the created event subscription.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 shows a high level system architecture of 5G system (5GS);
FIG.2 shows a flowchart of a method according to an embodiment of the present disclosure;
FIG.3 shows a flowchart of a method according to another embodiment of the present disclosure;
FIG.4 shows a flowchart of a method according to another embodiment of the present disclosure;
FIG.5 shows a flowchart of a method according to another embodiment of the present disclosure;
FIG.6 shows a flowchart of a method of network function (NF) service consumer updating subscribed event subscription according to an embodiment of the present disclosure;
FIG. 7 shows a flowchart of a method of a NF service consumer updating subscribed event subscription according to some embodiments of the present disclosure;
FIG. 8a illustrates a simplified block diagram of apparatus according to an embodiment of the present disclosure;
FIG. 8b illustrates a simplified block diagram of apparatus according to another embodiment of the present disclosure;
FIG. 9 illustrates a simplified block diagram of apparatus according to another embodiment of the present disclosure; and
FIG. 10 illustrates a simplified block diagram of apparatus according to another embodiment of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network" refers to a network following any suitable wireless/wired communication standards such as new radio (NR), long term evolution (LTE), LTE-Advanced, wideband code division multiple access (WCDMA), high-speed packet access (HSPA), Code Division Multiple Access (CDMA), Time Division Multiple Address (TDMA), Frequency Division Multiple Access (FDMA), Orthogonal Frequency-Division Multiple Access (OFDMA), Single carrier frequency division multiple access (SC-FDMA) and other wireless networks. A CDMA network may implement a radio technology such as Universal Terrestrial Radio Access (UTRA), etc. UTRA includes WCDMA and other variants of CDMA. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, Ad-hoc network, wireless sensor network, etc. In the following description, the terms "network" and "system" can be used interchangeably. Furthermore, the communications between two devices in the network may be performed according to any suitable communication protocols, including, but not limited to, the communication protocols as defined by a standard organization such as 3GPP. For example, the communication protocols as defined by 3GPP may comprise the second generation (2G), third generation(3G), fourth generation (4G), 4.5G, the fourth generation (5G) communication protocols, and/or any other protocols either currently known or to be developed in the future.

The term "network device" or "network node" used herein refers to a network device such as a core network device in a communication network. For example, in a wireless communication network such as a 3GPP-type cellular network, the network node may comprise a data management node (e.g., Unified Data Management (UDM) and Home Subscriber Server(HSS)) and a network exposure function node (e.g., NEF and SCEF), etc., which may offer numerous services to customers who are interconnected by an access network device. Each access network device is connectable to the core network device over a wired or wireless connection.

The term "network function (NF)" refers to any suitable function which can be implemented in a network node such as a core network node of a communication network. For example, the 5G communication system may comprise a plurality of NFs such as AMF (Access and mobility Function), SMF (Session Management Function), AUSF (Authentication Service Function), UDM (Unified Data Management), PCF (Policy Control Function), AF (Application Function), NEF (Network Exposure Function), UPF (User plane Function) and NRF (NF Repository Function), RAN (radio access network), etc. In other embodiments, the network function may comprise different types of NFs for example depending on a specific type of network.

The term "terminal device" refers to any end device that can access a communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, a portable computer, an image capture terminal device such as a digital camera, a gaming terminal device, a music storage and a playback appliance, a mobile phone, a cellular phone, a smart phone, a voice over IP (VoIP) phone, a wireless local loop phone, a tablet, a wearable device, a personal digital assistant (PDA), a portable computer, a desktop computer, a wearable terminal device, a vehicle-mounted wireless terminal device, a wireless endpoint, a mobile station, a laptop-embedded equipment (LEE), a laptop-mounted equipment (LME), a USB dongle, a smart device, a wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3GPP (3rd Generation Partnership Project), such as 3GPP' LTE standard or NR standard. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the communication network. Instead, a UE may represent a device that is intended for sale to, or operation by, a human user but that may not initially be associated with a specific human user.

As yet another example, in an Internet of Things (IOT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

For illustrative purposes, several embodiments of the present disclosure will be described in the context of a communication network such as 5G system (5GS). Those skilled in the art will appreciate, however, that the concept and principle of the several embodiments of the present disclosure may be more generally applicable to any other suitable communication networks.

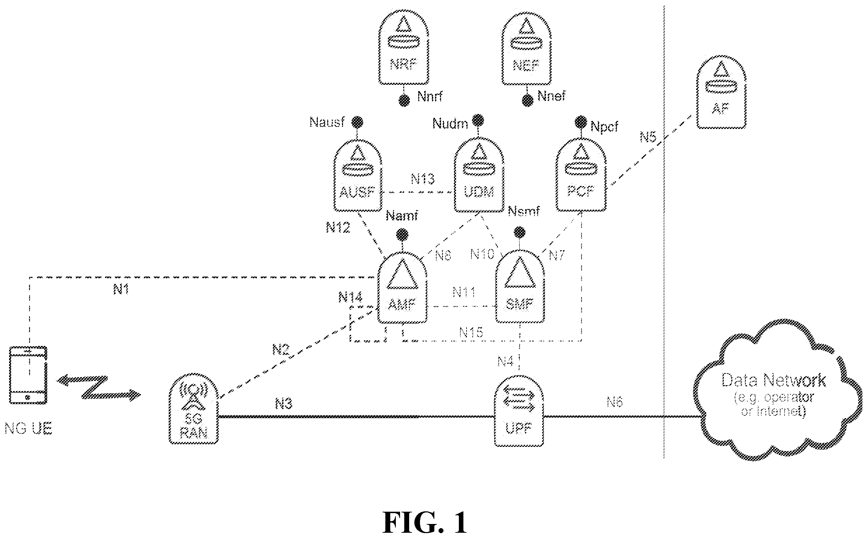

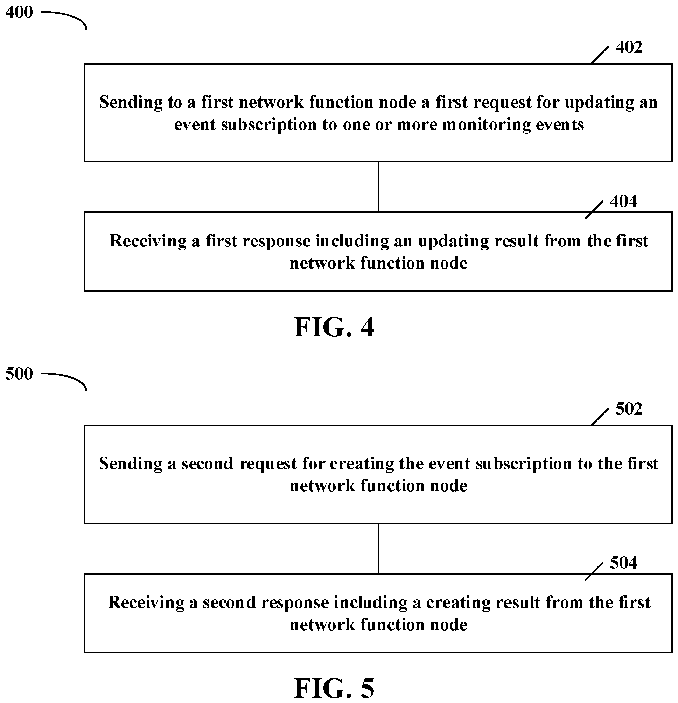

FIG.1 shows a high level system architecture of 5GS. As shown in FIG. 1, 5GS may comprise a plurality of NFs such as AMF, SMF, AUSF, UDM, PCF, AF, NEF, UPF, NRF and RAN, etc. In practice, a communication system may further include any additional elements suitable to support communication between terminal devices or between a wireless device and another communication device, such as a landline telephone, a service provider, or any other network node or terminal device. The communication system may provide communication and various types of services to one or more terminal devices to facilitate the terminal devices' access to and/or use of the services provided by, or via, the communication system.

The exemplary system architecture also contains service-based interfaces such as Nnrf, Nnef, Nausf, Nudm, Npcf, Namf and Nsmf exhibited by NFs such as the NRF, the NEF, the AUSF, the UDM, the PCF, the AMF and the SMF. In addition, FIG. 1 also shows some reference points such as N1, N2, N3, N4, N5, N6, N7, N8, N10, N11, N12, N13, N14 and N 15, which can support the interactions between NF services in the NFs. For example, these reference points may be realized through corresponding NF service-based interfaces and by specifying some NF service consumers and providers as well as their interactions in order to perform a particular system procedure.

Various NFs shown in FIG. 1 may be responsible for functions such as session management, mobility management, authentication, security, etc. These may be critical for delivering a service in the network. For example, the NEF may act as a gateway which can enable external users to monitor, provision and enforce an application policy for users inside the network. The AUSF may be configured as an authentication server. The UDM can store subscriber data and profiles. The PCF can provide a policy framework incorporating network slicing, roaming and mobility management. The AMF can manage access control and mobility. The SMF can set up and manage sessions according to a network policy. The UPF can be deployed in various configurations and locations according to the service type.

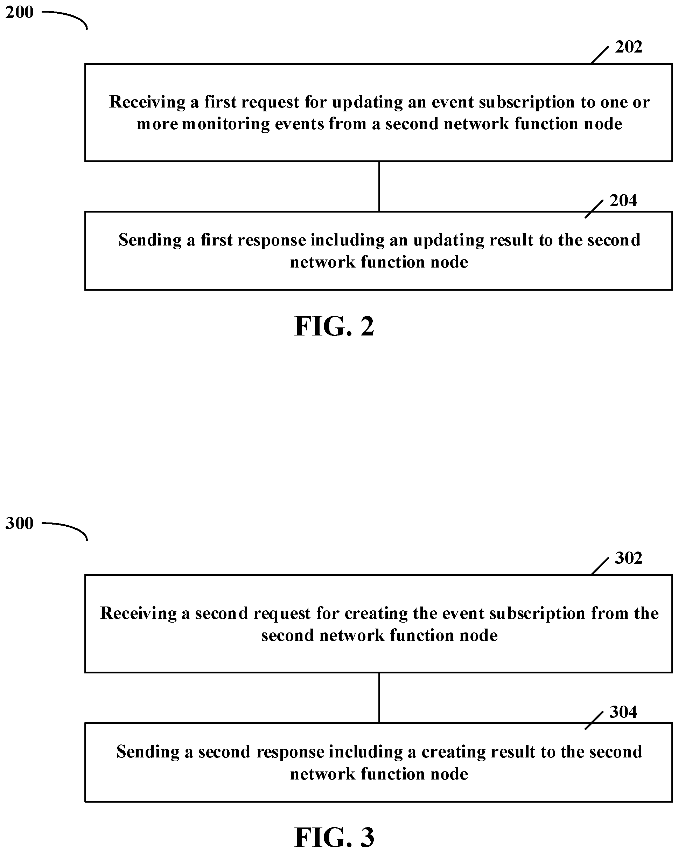

FIG. 2 shows a flowchart of a method according to an embodiment of the present disclosure, which may be performed by an apparatus implemented in/as a first network function node or communicatively coupled to a first network function node. As such, the apparatus may provide means for accomplishing various parts of the method 200 as well as means for accomplishing other processes in conjunction with other components. The first network function node may be a network function node which can support event subscription management function. For example, the first network function node may be UDM in 5GS. In other communication networks, the first network function node may be any other suitable network function node which can support event subscription management function, such as Home Subscriber Server (HSS).

At block 202, the first network function node may receive a first request for updating an event subscription to one or more monitoring events from a second network function node. The second network function node may be a network function node which can send a request to the first network function node to subscribe to notifications of event occurrence. For example, the second network function node may be an entity within the 3GPP architecture for service capability exposure, such as NEF or SCEF. In other embodiments, the second network function node may be other suitable network function node.

The updating of the event subscription may comprise any suitable updating operations such as adding, removing, or updating operations. In an embodiment, the updating of the event subscription may comprise at least one of adding a new monitoring event into the event subscription, removing a monitoring event from the event subscription, updating an attribute of a monitoring event in the event subscription, updating expiry time of an event reporting option for the event subscription, and updating a max number of reports of the event reporting option.

The first request for updating an event subscription may be implemented in any suitable request message. For example, the first request may be a Hyper Text Transfer Protocol (HTTP) PATCH or PUT request. The first request may comprise update indication information. In addition, the first request may further comprise information such as subscription identity which can be used by the first network function node to identify the event subscription to be updated. The first request may further comprise any other suitable information for example depending on the specified communication network and/or application scenario.

In an embodiment, the first request may include a user equipment identity (ID) representing a single user equipment (UE) or a group of UEs or any UE, and a subscription identity identifying the event subscription. The user equipment identity may represent a scope of the UE for which the subscription is applied. For example, the user equipment identity may contain a generic public subscription identifier (GPSI) of the user or an external group ID or any UE. As an example, if the user equipment identity represents a single UE, this parameter shall contain the GPSI, if the user equipment identity represents a group of UEs, this parameter shall contain the external group ID, and if the user equipment identity represents any UE, this parameter shall contain "any UE". The subscription identity may identify an individual subscription to notifications. The subscription identity may be allocated by the first network function node during a creation of a subscription resource.

After receiving the first request for updating an event subscription, the first network function node may process the first request and send a first response including an updating result to the second network function node at block 204. Depending on the content of the first request, the first network function node may generate various update results. For example, when the first request is a HTTP PATCH or PUT request, the updating result may comprise a first HTTP status code. When the first request is other request, the updating result may comprise any other suitable updating result.

In an embodiment, when the updating of the event subscription is successful, the updating result may indicate successful update. For example, the updating result may comprise a code indicating successful update.

In an embodiment, when the event subscription does not exist, the updating result may indicate that the event subscription does not exist. For example, the updating result may comprise a code indicating that the event subscription does not exist.

In an embodiment, when the updating can not be accepted, the updating result may indicate that the updating can not be accepted. For example, the updating result may comprise a code indicating that the updating can not be accepted.

In an embodiment, when the first request is a Hyper Text Transfer Protocol (HTTP) PATCH or PUT request, the updating result may comprise a first HTTP status code. For example, the first HTTP status code may comprise one of 200 OK, 204 No Content, 403 Forbidden, 404 Not Found. In other embodiments, the first HTTP status code may comprise other type of HTTP status code. In addition, some new first HTTP status codes may be defined to be used for the event subscription scenario.

In an embodiment where the first request is a HTTP PATCH or PUT request, when the updating of the event subscription is successful, the first HTTP status code may be set as 200 OK or 204 No Content; when the event subscription does not exist, the first HTTP status code may be set as 404 Not Found; and when the updating can not be accepted, the first HTTP status code may be set as 403 Forbidden.

In an embodiment, the first response may further include the updated event subscription or error information. For example, when the updating of the event subscription is successful, i.e., 200 OK, the first response may further include the updated event subscription. When the event subscription is not successful, the first response may further include the error information.

FIG.3 shows a flowchart of a method according to another embodiment of the present disclosure, which may be performed by an apparatus implemented in/as the first network function node or communicatively coupled to the first network function node. As such, the apparatus may provide means for accomplishing various parts of the method 300 as well as means for accomplishing other processes in conjunction with other components. The first network function node may be a network function node which can provide event subscription management. For example, the first network function node may be UDM in 5GS. In other communication networks, the first network function node may be any other suitable network function node which can provide event subscription management, such as HSS.

At block 302, the first network function node may receive a second request for creating the event subscription from the second network function node. The second request for creating the event subscription may be implemented in any suitable request. For example, the second request may be a Hyper Text Transfer Protocol (HTTP) POST request. The second request may comprise event subscription information. In addition, the second request may further comprise information such as the user equipment identity identifying a single UE or a group of UEs or any UE. The user equipment identity may represent a scope of the UE for which the subscription is applied as described above.

After receiving the second request, the first network function node may process the second request and send a second response including a creating result to the second network function node at block 304. Depending on the content of the second request, the first network function node may generate various creating results. For example, when the first request is a HTTP POST request, the creating result may comprise a second HTTP status code. When the first request is other request, the creating result may comprise any other suitable creating result.

In an embodiment, the second request and the second response may be similar to the HTTP POST request and response as described in clauses 5.5.2.2 of 3GPP TS 29.503 V15.2.1.

In various embodiments, the first network function node may comprise a data management node such as UDM and/or the second network function node may comprise a network exposure node such as NEF or SCEF.

FIG.4 shows a flowchart of a method according to an embodiment of the present disclosure, which may be performed by an apparatus implemented in a second network function node or communicatively coupled to a second network function node. As such, the apparatus may provide means for accomplishing various parts of the method 400 as well as means for accomplishing other processes in conjunction with other components. The second network function node may be a network function node which can send a request to the first network function node to subscribe to notifications of event occurrence. For example, the second network function node may be an entity within the 3GPP architecture for service capability exposure, such as NEF or SCEF. In other embodiments, the second network function node may be other suitable network function node. For some parts which have been described in the above embodiments, detailed description thereof is omitted here for brevity.

At block 402, the second network function node may send to a first network function node a first request for updating an event subscription to one or more monitoring events. The first request may be similar to the first request as described with reference to FIG. 2.

At block 404, the second network function node may receive a first response including an updating result from the first network function node. For example, as described above, the first network function node may receive the first request and send the first response, then the second network function node may receive the first response.

In an embodiment, the updating may comprise at least one of adding a new monitoring event into the event subscription, removing a monitoring event from the event subscription, updating an attribute of a monitoring event in the event subscription, updating expiry time of an event reporting option for the event subscription, and updating a max number of reports of the event reporting option.

In an embodiment, the first request may be a Hyper Text Transfer Protocol (HTTP) PATCH or PUT request.

In an embodiment, the updating result may comprise a first HTTP status code

In an embodiment, the first HTTP status code may comprise one of 200 OK, 204 No Content, 403 Forbidden, and 404 Not Found.

In an embodiment, when the updating of the event subscription is successful, the first HTTP status code is set as 200 OK or 204 No Content.

In an embodiment, when the event subscription does not exist, the first HTTP status code is set as 404 Not Found.

In an embodiment, when the updating can not be accepted, the first HTTP status code is set as 403 Forbidden.

In an embodiment, the first request may include a user equipment identity representing a single user equipment (UE) or a group of UEs or any UE, and a subscription identity identifying the event subscription

In an embodiment, the first response further includes the updated event subscription or error information.

FIG.5 shows a flowchart of a method according to another embodiment of the present disclosure, which may be performed by an apparatus implemented in a second network function node or communicatively coupled to a second network function node.

At block 502, the second network function node may send a second request for creating the event subscription to the first network function node. The second request may be similar to the second request as described with reference to FIG. 3.

At block 504, the second network function node may receive a second response including a creating result from the first network function node. The second response may be similar to the second response as described with reference to FIG. 3.

In an embodiment, the second request may be a Hyper Text Transfer Protocol (HTTP) POST request and the creating result may comprise a second HTTP status code.

In an embodiment, the first network function node and the second network function node may be network function nodes of a wireless communication system such as 5GS.

In an embodiment, the first network function node may comprise a data management node such as UDM and/or the second network function node may comprise a network exposure function node such as NEF or SCEF.

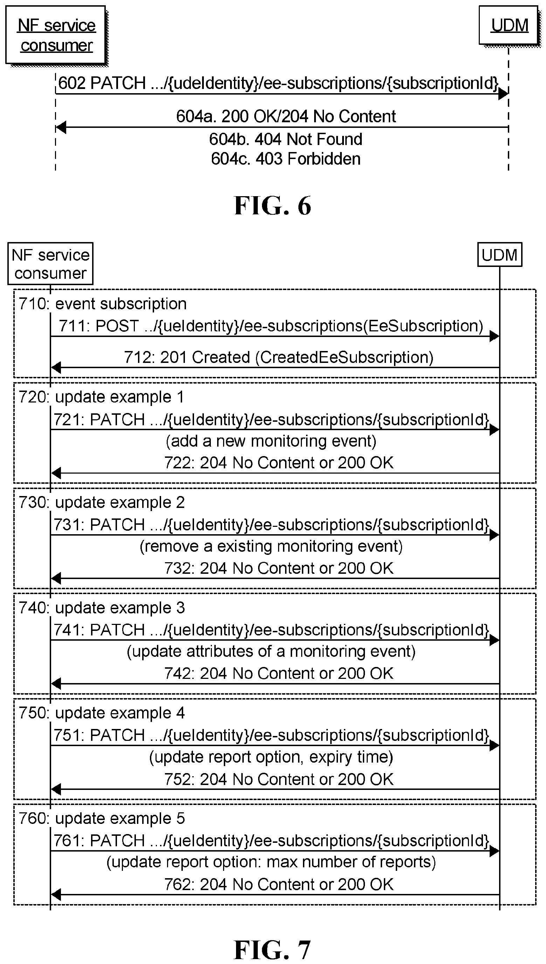

FIG.6 shows a flowchart of a method of NF service consumer updating subscribed event subscription according to an embodiment of the present disclosure.

As shown in FIG.6, the NF service consumer (e.g. NEF or SCEF) sends a HTTP PATCH request to a resource representing the subscribed event notification, {apiRoot}/nudm-ee/v1/{ueIdentity}/ee-subscriptions/{subscriptionId} at step 602. The parameters "apiRoot", "nudm-ee", "v1", "ueIdentity", "ee-subscriptions" and "subscriptionId" may be similar to the corresponding parameters as described in 3GPP TS 29.503 V15.2.1.

For a data model, JSON (JavaScript Object Notation) patch-item based mechanism is used as in this embodiment. 3GPP OpenAPI (open application programming interface) may be extended to support the HTTP PATCH based method on the individual event subscription, an added part of OpenAPI may be listed as below:

```
/{ueIdentity}/ee-subscriptions/{subscriptionId}:
 patch:
     summary: Patch
     operationId: UpdateEeSubscription
     tags :
       - Update EE Subscription
     parameters:
       - name: ueIdentity
          in: path
          description: Represents the scope of the UE for which the
 subscription is applied. Contains the GPSI of the user or the
 external group ID or any UE.
          required: true
          schema:
            type: string
            pattern:
  '^(msisdn-[0-9]{5,15}|.+|extid-[^@]+@[^@]+lextgroupid-[^@]+@[^
 @]+|anyUE)$'
       - name: subscriptionId
          in: path
          description: Id of the EE Subscription
          required: true
          schema:
            type: string
     requestBody:
       content:
          application/json-patch+json:
            schema:
              type: array
              items:
                $ref:
  'TS29571_CommonData.yaml#/components/schemas/PatchItem'
              minItems: 1
       required: true
     responses:
          '200' :
            $ref: '#/components/schemas/UpdatedEeSubscription'
          '403' :
            description: Forbidden
          '404':
            description: Not Found
          default:
            description: Unexpected error
```

At step 604a, on success, the UDM responds with "200 OK" with updated event subscription or "204 No Content".

At step 604b, if the resource does not exist, e.g. the subscriptionId cannot be found, HTTP status code "404 Not Found" may be returned including additional error information in the response body (in the "ProblemDetails" element).

At step 604c, if the modification can't be accepted, HTTP status code "403 Forbidden" may be returned including additional error information in the response body (in the "ProblemDetails" element).

On failure, an appropriate HTTP status code indicating the error may be returned and appropriate additional error information may be returned in the PATCH response body.

FIG. 7 shows a flowchart of a method of a NF service consumer updating subscribed event subscription according to some embodiments of the present disclosure. The messages shown in FIG.7 may be based on JSON format.

Block 710 is related to event subscription. At step 711, the NF service consumer subscribes an event subscription on UDM. The message of step 711 may be based on JSON format as below:

```
 {
 "callbackReference": "http://example.nef.com/notif",
 "monitoringConfigurations": {
   "E1": {
       "eventType": LOCATION REPORTING
       "immediateFlag": false,
       "locationReportingConfiguration": {
       "currentLocation": true,
       "locationAccuracy": "CELL LEVEL"
     }
   },
   "E2": {
       "eventType": ROAMING STATUS
       "immediateFlag": false,
   },
   "E3": {
       "eventType": UE REACHABILITY FOR SMS
       "immediateFlag": false,
   }
 },
 "reportingOptions": {
       "maxNumOfReports": 100
       "expiry": "2018-12-06T07:50:58.814Z"
 },
 }
```

There are three events (identified as E1, E2 and E3 for "LOCATION_REPORTING", "ROAMING_STATUS", "UE_REACHABILITY_FOR_SMS" respectively) which are requested to be monitored for the user(s) identified by ueIdentity by UDM. When the event subscription is successfully created, UDM may send a response with 201 Created to the NF service consumer at step 712. The response with the created event subscription may be based on JSON format as below:

```
 {
 "eeSubscription": {
       "callbackReference": "http://example.nef.com/notif",
       "monitoringConfigurations": {
       "E1": {
               "eventType": LOCATION REPORTING
               "immediateFlag": false,
               "locationReportingConfiguration": {
                        "currentLocation": true,
               "locationAccuracy": "CELL LEVEL"
               }
       },
       "E2": { "eventType": ROAMING STATUS
               "immediateFlag": false,
       },
       "E3": {"eventType": UE REACHABILITY FOR SMS
               "immediateFlag": false,
       }
 },
 "reportingOptions": {
   "maxNumOfReports": 100
   "expiry": "2018-12-06T07:50:58.814Z"
  },
 }
```

Block 720 is related to update example 1. Update example 1 is for adding a new monitoring event in the created event subscription (such as E4 for "UE REACHABILITY FOR DATA") which is requested to be monitored for the user(s) identified by ueIdentity by UDM. At step 721, the NF service consumer may send a request for adding a new monitoring event in the created event subscription. The request of step 721 may be based on JSON format as below:

```
 [{
   "op": add,
  "path": "/EeSubscription/monitoringConfigurations/-",
  "value": ""E4": {
       "eventType": UE_REACHABILITY_FOR_DATA
       "immediateFlag": false,
   }"
  }
 ]
```

In this embodiment, UDM successfully adds a new monitoring event into the created event subscription, now it contains four monitoring events (E1, E2, E3, E4 respectively) in the updated event subscription. UDM may send a response with 204 No Content or 200 OK to the NF service consumer at step 722. The response with the updated event subscription may be based on JSON format as below:

```
 {
 "eeSubscription": {
       "callbackReference": "http://example.nef.com/notif",
       "monitoringConfigurations": {
       "E1": {
               "eventType": LOCATION REPORTING
               "immediateFlag": false,
               "locationReportingConfiguration": {
                        "currentLocation": true,
               "locationAccuracy": "CELL LEVEL"
       "E2": {}"eventType": ROAMING STATUS
               "immediateFlag": false,
       },
       "E3": {"eventType": UE REACHABILITY FOR SMS
               "immediateFlag": false,
       }
       "E4": {"eventType": UE REACHABILITY FOR DATA
               "immediateFlag": false,
       }
 },
 "reportingOptions": {
   "maxNumOfReports": 100
   "expiry": "2018-12-06T07:50:58.814Z"
   },
 }
```

Block 730 is related to update example 2. Update example 2 is for removing an existing monitoring event in the created event subscription (such as E3 for "UE_REACHABILITY_FOR_SMS"). At step 731, the NF service consumer may send a request for removing an existing monitoring event in the created event subscription. The message of step 731 may be based on JSON format as below:

```
 [{
   "op": remove,
   "path": "/EeSubscription/monitoringConfigurations/3 ",
  }
 ]
```

In this embodiment, UDM successfully removes an existing monitoring event from the created event subscription, now it contains three monitoring events (E3 was removed) in the updated event subscription. UDM may send a response with 204 No Content or 200 OK to the NF service consumer at step 731. The response with the updated event subscription may be based on JSON format as below:

```
 {
 "eeSubscription": {
       "callbackReference": "http://example.nef.com/notif",
       "monitoringConfigurations": {
       "E1": {
               "eventType": LOCATION REPORTING
               "immediateFlag": false,
               "locationReportingConfiguration": {
                        "currentLocation": true,
               "locationAccuracy": "CELL LEVEL"
               }
       },
       "E2": {"eventType": ROAMING STATUS
               "immediateFlag": false,
       },
       "E4": {"eventType": UE REACHABILITY FOR DATA
               "immediateFlag": false,
       }
 },
 "reportingOptions": {
   "maxNumOfReports": 100
   "expiry": "2018-12-06T07:50:58.814Z"
  },
 }
```

Block 740 is related to update example 3. Update example 3 is for updating attributes of an existing monitoring event in the created event subscription (such as E1 for "LOCATION REPORTING") which is requested to be monitored for the user(s) identified by ueIdentity by UDM. At step 741, the NF service consumer may send a request for updating attributes of an existing monitoring event in the created event subscription. The message of step 741 may be based on JSON format as below:

```
 [{
   "op": replace,
   "path": "/EeSubscription/monitoringConfigurations/1/
   locationReportingConfiguration/locationAccuracy",
   "value": "TA LEVEL"
  }
 ]
```

In this embodiment, UDM successfully updates the locationAccuracy attribute of an existing monitoring event in the created event subscription, now E1's attribute locationAccuracy is updated from CELL_LEVEL to TA_LEVEL. UDM may send a response with 204 No Content or 200 OK to the NF service consumer at step 742. The response with the updated event subscription may be based on JSON format as below:

```
 {
 "eeSubscription": {
       "callbackReference": "http://example.nef.com/notif",
       "monitoringConfigurations": {
       "E1": {
               "eventType": LOCATION REPORTING
               "immediateFlag": false,
               "locationReportingConfiguration": {
                        "currentLocation": true,
               "locationAccuracy": "TA_LEVEL"
               }
       },
       "E2": {"eventType": ROAMING STATUS
               "immediateFlag": false,
       },
       "E4": {"eventType": UE REACHABILITY FOR DATA
               "immediateFlag": false,
       }
 },
 "reportingOptions": {
   "maxNumOfReports": 100
   "expiry": "2018-12-06T07:50:58.814Z"
  },
 }
```

Block 750 is related to update example 4. Example 4 is for updating expiry attribute of the report option in the created event subscription. At step 751, the NF service consumer may send a request for updating expiry attribute of the report option in the created event subscription. The message of step 751 may be based on JSON format as below:

```
 [{
   "op": replace,
   "path": "/EeSubscription/reportingOptions/expiry",
   "value": "2019-02-01T07:50:58.814Z"
  }
 ]
```

In this embodiment, UDM successfully updates expiry of the report option in the created event subscription, now expiry time is prolonged to 2019-02-01T07:50:58.814Z. UDM may send a response with 204 No Content or 200 OK to the NF service consumer at step 752. The response with the updated event subscription may be based on JSON format as below:

```
 {
 "eeSubscription": {
       "callbackReference": "http://example.nef.com/notif",
       "monitoringConfigurations": {
       "E1": {
               "eventType": LOCATION REPORTING
               "immediateFlag": false,
               "locationReportingConfiguration": {
                        "currentLocation": true,
               "locationAccuracy": "TA LEVEL"
               }
       },
       "E2": { "eventType": ROAMING STATUS
               "immediateFlag": false,
       },
       "E4": { "eventType": UE REACHABILITY FOR DATA
               "immediateFlag": false,
       }
 },
 "reportingOptions": {
   "maxNumOfReports": 100
   "expiry": "2019-02-01T07:50:58.814Z"
  },
 }
```

Block 760 is related to update example 5. Example 5 is for updating "max number of reports" of the report option in the created event subscription. At step 761, the NF service consumer may send a request for updating "max number of reports" of the report option in the created event subscription. The message of step 761 may be based on JSON format as below:

```
 [{
   "op": replace,
   "path": "/EeSubscription/reportingOptions/maxNumOfReports",
   "value": "1000"
  }
 ]
```

In this embodiment, UDM successfully updates "max number of reports" of the report option in the created event subscription, now maxNumOfReports is updated from 100 to 1000. UDM may send a response with 204 No Content or 200 OK to the NF service consumer at step 762. The response with the updated event subscription may be based on JSON format as below:

```
 {
 "eeSubscription": {
       "callbackReference": "http://example.nef.com/notif",
       "monitoringConfigurations": {
       "E1": {
               "eventType": LOCATION REPORTING
               "immediateFlag": false,
               "locationReportingConfiguration": {
                        "currentLocation": true,
               "locationAccuracy": "TA_LEVEL"
               }
       },
       "E2": { "eventType": ROAMING STATUS
               "immediateFlag": false,
       },
       "E4": { "eventType": UE REACHABILITY FOR DATA
               "immediateFlag": false,
       }
 },
 "reportingOptions": {
   "maxNumOfReports": 1000
   "expiry": "2019-02-01T07:50:58.814Z"
  },
 }
```

It is noted that though the update operations of blocks 720, 730, 740, 750 and 760 are described in multiple pairs of update request and response messages, two or more of them can also be implemented by using a pair of update request and response message. For example, a single update request may be used for two or more types of update operations.

The embodiments of the present disclosure propose a new solution to support the update of the created event subscription, so the requirements from service consumer for updating the created event subscription can be fulfilled. The embodiments of the present disclosure can support update of the monitoring events in the created event subscription and update of the reporting options for the event notifications in the created event subscription.

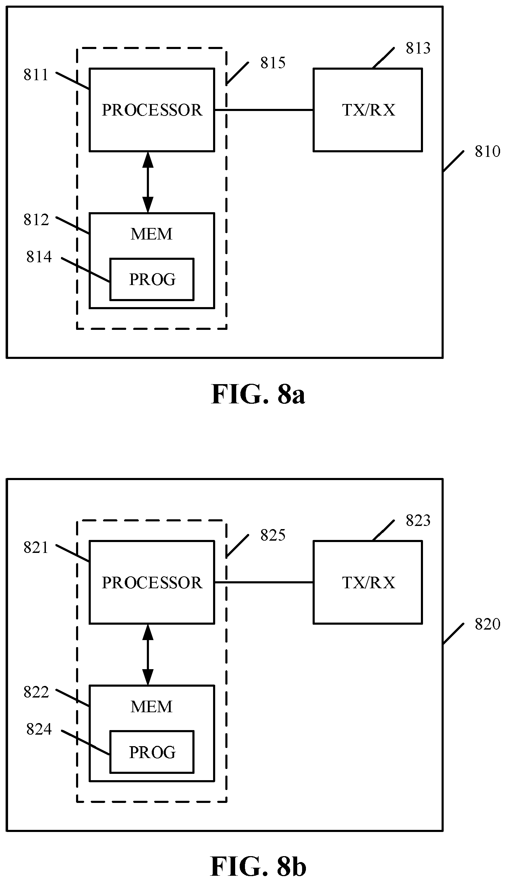

FIG. 8a illustrates a simplified block diagram of an apparatus 810 that may be embodied in/as a first network function node such as UDM according to an embodiment of the present disclosure. FIG. 8b illustrates an apparatus 820 that may be embodied in/as a second network function node such as NEF or SCEF according to an embodiment of the present disclosure.

The apparatus 810 may comprise at least one processor 811, such as a data processor (DP) and at least one memory (MEM) 812 coupled to the processor 811. The apparatus 810 may further comprise a transmitter TX and receiver RX 813 coupled to the processor 811. The MEM 812 stores a program (PROG) 814. The PROG 814 may include instructions that, when executed on the associated processor 811, enable the apparatus 810 to operate in accordance with the embodiments of the present disclosure, for example to perform the methods 200, 300. A combination of the at least one processor 811 and the at least one MEM 812 may form processing means 815 adapted to implement various embodiments of the present disclosure.

The apparatus 820 comprises at least one processor 821, such as a DP, and at least one MEM 822 coupled to the processor 821. The apparatus 820 may further comprise a transmitter TX and receiver RX 823 coupled to the processor 821. The MEM 822 stores a PROG 824. The PROG 824 may include instructions that, when executed on the associated processor 821, enable the apparatus 820 to operate in accordance with the embodiments of the present disclosure, for example to perform the methods 400 and 500. A combination of the at least one processor 821 and the at least one MEM 822 may form processing means 825 adapted to implement various embodiments of the present disclosure.

Various embodiments of the present disclosure may be implemented by computer program executable by one or more of the processors 811 and 821, software, firmware, hardware or in a combination thereof.

The MEMs 812 and 822 may be of any type suitable to the local technical environment and may be implemented using any suitable data storage technology, such as semiconductor based memory devices, magnetic memory devices and systems, optical memory devices and systems, fixed memory and removable memory, as non-limiting examples.

The processors 811 and 821 may be of any type suitable to the local technical environment, and may include one or more of general purpose computers, special purpose computers, microprocessors, digital signal processors (DSPs) and processors based on multicore processor architecture, as non-limiting examples.

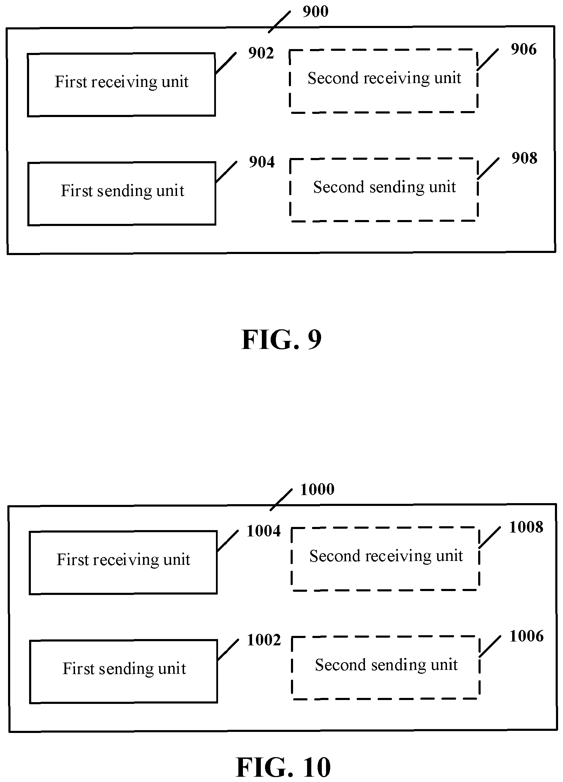

Reference is now made to FIG. 9, which illustrates a schematic block diagram of an apparatus 900 at a first network function node. The apparatus 900 is operable to carry out the exemplary methods related to the first network function node as described above.

As shown in FIG. 9, the apparatus 900 may comprise a first receiving unit 902 configured to receive a first request for updating an event subscription to one or more monitoring events from a first network function node and a first sending unit 904 configured to send a first response including an updating result to the second network function node.

In an embodiment, the apparatus 900 may further comprise a second receiving unit 906 configured to receiving a second request for creating the event subscription from the second network function node and a second sending unit 908 configured to send a second response including a creating result to the second network function node.

Reference is now made to FIG. 10, which illustrates a schematic block diagram of an apparatus 1000 at a second network function node. The apparatus 1000 is operable to carry out the exemplary methods related to the second network function node as described above.

As shown in FIG. 10, the apparatus 1000 may comprise a first sending unit 1002 configured to send a first request for updating an event subscription to a first network function node and a second receiving unit 1004 configured to receive a first response including an updating result from the first network function node.

In an embodiment, the apparatus 1000 may further comprise a second sending unit 1006 configured to send to the first network function node a second request for creating the event subscription to one or more monitoring events and a second receiving unit 1008 configured to receive a second response including a creating result from the first network function node.

It would be appreciated that, some units or modules in the apparatus 900 and 1000 can be combined in some implementations. For example, in one embodiment, it is possible to use a single transceiving unit to send and receive the information.

According to an aspect of the disclosure it is provided a computer program product being tangibly stored on a computer readable storage medium and including instructions which, when executed on at least one processor, cause the at least one processor to carry out the method related to the first network function node as described above.

According to an aspect of the disclosure it is provided a computer program product being tangibly stored on a computer readable storage medium and including instructions which, when executed on at least one processor, cause the at least one processor to carry out the method related to the second network function node as described above.

According to an aspect of the disclosure it is provided a computer-readable storage medium storing instructions which when executed by at least one processor, cause the at least one processor to perform the method related to the first network function node as described above.

According to an aspect of the disclosure it is provided a computer-readable storage medium storing instructions which when executed by at least one processor, cause the at least one processor to perform the method related to the second network function node as described above.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. Such modifications and variations are considered to be within the scope of the disclosure and the appended claims. The protection scope of the disclosure is defined by the accompanying claims.

## Claims

1. A method (200) at a unified data management, UDM, network function node that provides a Nudm_EventExposure Service, comprising:
receiving (202) a first request for updating an event subscription to one or more monitoring events from a second network function node; and
sending (204) a first response including an updating result to the second network function node.

2. The method according to claim 1, wherein updating the event subscription comprises at least one of:
adding a new monitoring event into the event subscription,
removing a monitoring event from the event subscription,
updating an attribute of a monitoring event in the event subscription,
updating expiry time of an event reporting option for the event subscription, and
updating a max number of reports of the event reporting option.

3. The method according to claim 1 or 2, wherein:
- the first request is a Hyper Text Transfer Protocol, HTTP, PATCH or PUT request; and/or
- the updating result comprises a first HTTP status code; and, optionally, wherein the first HTTP status code comprises one of:
200 OK,
204 No Content,
403 Forbidden,
404 Not Found.

4. The method according to claim 3, wherein:
when the updating of the event subscription is successful, the first HTTP status code is set as 200 OK or 204 No Content,
when the event subscription does not exist, the first HTTP status code is set as 404 Not Found, and
when the updating can not be accepted, the first HTTP status code is set as 403 Forbidden.

5. The method according to any of claims 1 to 4, wherein:
- the first request includes a user equipment identity representing a single user equipment, UE, or a group of UEs or any UE, and a subscription identity identifying the event subscription; and/or
- the first response further includes the updated event subscription or error information; and/or
- the method further comprises:
receiving (302) a second request for creating the event subscription from the second network function node; and
sending (304) a second response including a creating result to the second network function node; and, optionally,
wherein the second request is a Hyper Text Transfer Protocol, HTTP, POST request and the creating result comprises a second HTTP status code.

6. The method according to any of claims 1-5, wherein:
- the first network function node and the second network function node are network function nodes of a wireless communication system; and/or
- the second network function node comprises a network exposure node.

7. A method (400) at a second network function node, comprising:
sending (402), to a unified data management, UDM, network function node that provides a Nudm_EventExposure Service, a first request for updating an event subscription to one or more monitoring events; and
receiving (404) a first response including an updating result from the UDM network function node.

8. The method according to claim 7, wherein updating the event subscription comprises at least one of:
adding a new monitoring event into the event subscription,
removing a monitoring event from the event subscription,
updating an attribute of a monitoring event in the event subscription,
updating expiry time of an event reporting option for the event subscription, and
updating a max number of reports of the event reporting option.

9. The method according to claim 7 or 8, wherein:
- the first request is a Hyper Text Transfer Protocol, HTTP, PATCH or PUT request; and/or
- the updating result comprises a first HTTP status code; and, optionally, wherein the first HTTP status code comprises one of:
200 OK,
204 No Content,
403 Forbidden,
404 Not Found.

10. The method according to claim 9, wherein:
when the updating of the event subscription is successful, the first HTTP status code is set as 200 OK or 204 No Content,
when the event subscription does not exist, the first HTTP status code is set as 404 Not Found, and
when the updating can not be accepted, the first HTTP status code is set as 403 Forbidden.

11. The method according to any of claims 7 to 10, wherein:
- the first request includes a user equipment identity representing a single user equipment, UE, or a group of UEs or any UE, and a subscription identity identifying the event subscription; and/or
- the first response further includes the updated event subscription or error information; and/or
- the method further comprises:
sending (502) a second request for creating the event subscription to the first network function node; and
receiving (504) a second response including a creating result from the first network function node; and, optionally,
wherein the second request is a Hyper Text Transfer Protocol, HTTP, POST request and the creating result comprises a second HTTP status code.

12. The method according to any of claims 7 to 11, wherein:
- the first network function node and the second network function node are network function nodes of a wireless communication system; and/or
- the second network function node comprises a network exposure node.

13. An apparatus (810) at a unified data management, UDM, network function node that provides a Nudm_EventExposure Service, comprising:
a processor (811); and
a memory (812) coupled to the processor (811), said memory (812) containing instructions executable by said processor (811), whereby said apparatus (810) is operative to perform the method of any one of claims 1 to 6.

14. An apparatus (820) at a second network function node, comprising:
a processor (821); and
a memory (822) coupled to the processor (821), said memory (822) containing instructions executable by said processor (822), whereby said apparatus (820) is operative to perform the method of any one of claims 7 to 12.

15. A computer-readable storage medium storing instructions which when executed by at least one processor, cause the at least one processor to perform the method according to any one of claims 1 to 12.

## Patentansprüche

1. Verfahren (200) an einem Netzwerkfunktionsknoten für einheitliche Datenverwaltung, UDM, der einen Nudm_EventExposure-Dienst bereitstellt, umfassend:
Empfangen (202) einer ersten Anforderung zur Aktualisierung eines Ereignisabonnements für ein oder mehrere Überwachungsereignisse von einem zweiten Netzwerkfunktionsknoten; und
Senden (204) einer ersten Antwort, die ein Aktualisierungsergebnis umfasst, an den zweiten Netzwerkfunktionsknoten.

2. Verfahren nach Anspruch 1, wobei das Aktualisieren des Ereignisabonnements mindestens eines von Folgendem umfasst:
Hinzufügen eines neuen Überwachungsereignisses zum Ereignisabonnement,
Entfernen eines Überwachungsereignisses aus dem Ereignisabonnement,
Aktualisieren eines Attributs eines Überwachungsereignisses im Ereignisabonnement,
Aktualisieren einer Ablaufzeit einer Ereignismeldeoption für das Ereignisabonnement und
Aktualisieren einer maximalen Anzahl von Meldungen der Ereignismeldeoption.

3. Verfahren nach Anspruch 1 oder 2, wobei
- die erste Anforderung eine HyperText-Transfer-Protocol-,HTTP-,PATCH- oder -PUT-Anforderung ist; und/oder
- das Aktualisierungsergebnis einen ersten HTTP-Statuscode umfasst; und optional
wobei der erste HTTP-Statuscode einen von Folgenden umfasst:
200 OK,
204 No Content,
403 Forbidden,
404 Not Found.

4. Verfahren nach Anspruch 3, wobei:
wobei der erste HTTP-Statuscode als 200 OK oder 204 No Content festgelegt wird, wenn die Aktualisierung des Ereignisabonnements erfolgreich ist,
wobei der erste HTTP-Statuscode als 404 Not Found festgelegt wird, wenn das Ereignisabonnement nicht existiert, und
wobei der erste HTTP-Statuscode als 403 Forbidden festgelegt wird, wenn die Aktualisierung nicht akzeptiert werden kann.

5. Verfahren nach einem der Ansprüche 1 bis 4, wobei:
- die erste Anforderung eine Benutzereinrichtungsidentität, die eine einzelne Benutzereinrichtung, UE, oder eine Gruppe von UEs oder eine beliebige UE darstellt, und eine Abonnementidentität umfasst, die das Ereignisabonnement identifiziert; und/oder
- die erste Antwort ferner das aktualisierte Ereignisabonnement oder Fehlerinformationen umfasst; und/oder
- wobei das Verfahren ferner umfasst:
Empfangen (302) einer zweiten Anforderung zum Erstellen des Ereignisabonnements vom zweiten Netzwerkfunktionsknoten; und
Senden (304) einer zweiten Antwort, die ein Erstellungsergebnis umfasst, an den zweiten Netzwerkfunktionsknoten; und optional
wobei die zweite Anforderung eine HyperText-Transfer-Protocol-,HTTP-,POST-Anforderung ist und das Erstellungsergebnis einen zweiten HTTP-Statuscode umfasst.

6. Verfahren nach einem der Ansprüche 1 bis 5, wobei:
- der erste Netzwerkfunktionsknoten und der zweite Netzwerkfunktionsknoten Netzwerkfunktionsknoten eines Drahtloskommunikationssystems sind;
und/oder
- der zweite Netzwerkfunktionsknoten einen Netzwerkdarlegungsknoten umfasst.

7. Verfahren (400) an einem zweiten Netzwerkfunktionsknoten, umfassend:
Senden (402) einer ersten Anforderung zum Aktualisieren eines Ereignisabonnements für ein oder mehrere Überwachungsereignisse an einen Netzwerkfunktionsknoten für einheitliche Datenverwaltung, UDM, der einen Nudm_EventExposure-Dienst bereitstellt; und
Empfangen (404) einer ersten Antwort, die ein Aktualisierungsergebnis umfasst, vom UDM-Netzwerkfunktionsknoten.

8. Verfahren nach Anspruch 7, wobei das Aktualisieren der Ereignisabonnements mindestens eines von Folgendem umfasst:
Hinzufügen eines neuen Überwachungsereignisses zum Ereignisabonnement,
Entfernen eines Überwachungsereignisses aus dem Ereignisabonnement,
Aktualisieren eines Attributs eines Überwachungsereignisses im Ereignisabonnement,
Aktualisieren einer Ablaufzeit einer Ereignismeldeoption für das Ereignisabonnement und
Aktualisieren einer maximalen Anzahl von Meldungen der Ereignismeldeoption.

9. Verfahren nach Anspruch 7 oder 8, wobei
- die erste Anforderung eine HyperText-Transfer-Protocol-,HTTP-,PATCH- oder -PUT-Anforderung ist; und/oder
- das Aktualisierungsergebnis einen ersten HTTP-Statuscode umfasst; und optional
wobei der erste HTTP-Statuscode einen von Folgenden umfasst:
200 OK,
204 No Content,
403 Forbidden,
404 Not Found.

10. Verfahren nach Anspruch 9, wobei:
wobei der erste HTTP-Statuscode als 200 OK oder 204 No Content festgelegt wird, wenn die Aktualisierung des Ereignisabonnements erfolgreich ist,
wobei der erste HTTP-Statuscode als 404 Not Found festgelegt wird, wenn das Ereignisabonnement nicht existiert, und
wobei der erste HTTP-Statuscode als 403 Forbidden festgelegt wird, wenn die Aktualisierung nicht akzeptiert werden kann.

11. Verfahren nach einem der Ansprüche 7 bis 10, wobei:
- die erste Anforderung eine Benutzereinrichtungsidentität, die eine einzelne Benutzereinrichtung, UE, oder eine Gruppe von UEs oder eine beliebige UE darstellt, und eine Abonnementidentität umfasst, die das Ereignisabonnement identifiziert; und/oder
- die erste Antwort ferner das aktualisierte Ereignisabonnement oder Fehlerinformationen umfasst; und/oder
- wobei das Verfahren ferner umfasst:
Senden (502) einer zweiten Anforderung zum Erstellen des Ereignisabonnements an den ersten Netzwerkfunktionsknoten; und
Empfangen (504) einer zweiten Antwort, die ein Erstellungsergebnis umfasst, vom ersten Netzwerkfunktionsknoten; und optional
wobei die zweite Anforderung eine HyperText-Transfer-Protocol-,HTTP-,POST-Anforderung ist und das Erstellungsergebnis einen zweiten HTTP-Statuscode umfasst.

12. Verfahren nach einem der Ansprüche 7 bis 11, wobei:
- der erste Netzwerkfunktionsknoten und der zweite Netzwerkfunktionsknoten Netzwerkfunktionsknoten eines Drahtloskommunikationssystems sind; und/oder
- der zweite Netzwerkfunktionsknoten einen Netzwerkdarlegungsknoten umfasst.

13. Vorrichtung (810) an einem Netzwerkfunktionsknoten für einheitliche Datenverwaltung, UDM, der einen Nudm_EventExposure-Dienst bereitstellt, umfassend:
einen Prozessor (811); und
einen Speicher (812), der mit dem Prozessor (811) gekoppelt ist, wobei der Speicher (812) Anweisungen enthält, die vom Prozessor (811) ausgeführt werden können, wodurch die Vorrichtung (810) zum Durchführen des Verfahrens nach einem der Ansprüche 1 bis 6 ausgelegt ist.

14. Vorrichtung (820) an einem zweiten Netzwerkfunktionsknoten, umfassend:
einen Prozessor (821); und
einen Speicher (822), der mit dem Prozessor (821) gekoppelt ist, wobei der Speicher (822) Anweisungen enthält, die vom Prozessor (821) ausgeführt werden können, wodurch die Vorrichtung (820) zum Durchführen des Verfahrens nach einem der Ansprüche 7 bis 12 ausgelegt ist.

15. Computerlesbares Speichermedium, das Anweisungen speichert, die bei Ausführung durch mindestens einen Prozessor den mindestens einen Prozessor zum Durchführen des Verfahrens nach einem der Ansprüche 1 bis 12 veranlassen.

## Revendications

1. Procédé (200) au niveau d'un noeud de fonction de réseau de gestion unifiée de données, UDM, qui fournit un service Nudm_EventExposure, comprenant :
la réception (202) d'une première demande de mise à jour d'un abonnement d'événement à un ou plusieurs événements de surveillance depuis un deuxième noeud de fonction de réseau ; et
l'envoi (204) d'une première réponse incluant un résultat de mise à jour au deuxième noeud de fonction de réseau.

2. Procédé selon la revendication 1, dans lequel la mise à jour de l'abonnement d'événement comprend au moins l'un parmi :
l'ajout d'un nouvel événement de surveillance dans l'abonnement d'événement,
la suppression d'un événement de surveillance de l'abonnement d'événement,
la mise à jour d'un attribut d'un événement de surveillance dans l'abonnement d'événement,
la mise à jour d'un temps d'expiration d'une option de rapport d'événement pour l'abonnement d'événement, et
la mise à jour d'un nombre maximal de rapports de l'option de rapport d'événement.

3. Procédé selon la revendication 1 ou 2, dans lequel :
- la première demande est une demande Hyper Text Transfer Protocol, HTTP, PATCH ou PUT ; et/ou
- le résultat de mise à jour comprend un premier code de statut HTTP ; et facultativement
dans lequel le premier code de statut HTTP comprend l'un parmi :
200 OK,
204 No Content,
403 Forbidden,
404 Not Found.

4. Procédé selon la revendication 3, dans lequel :
lorsque la mise à jour de l'abonnement d'événement est réussie, le premier code de statut HTTP est réglé en tant que 200 OK ou 204 No Content,
lorsque l'abonnement d'événement n'existe pas, le premier code de statut HTTP est réglé en tant que 404 Not Found, et
lorsque la mise à jour ne peut pas être acceptée, le premier code de statut HTTP est réglé en tant que 403 Forbidden.

5. Procédé selon l'une quelconque des revendications 1 à 4, dans lequel :
- la première demande inclut une identité d'équipement utilisateur représentant un équipement utilisateur, UE, unique ou un groupe d'UE ou n'importe quel UE, et une identité d'abonnement identifiant l'abonnement d'événement ; et/ou
- la première réponse inclut en outre l'abonnement d'événement mis à jour ou des informations d'erreur ; et/ou
- le procédé comprend en outre :
la réception (302) d'une deuxième demande pour créer l'abonnement d'événement depuis le deuxième noeud de fonction de réseau ; et
l'envoi (304) d'une deuxième réponse incluant un résultat de création au deuxième noeud de fonction de réseau ; et facultativement
dans lequel la deuxième demande est une demande Hyper Text Transfer Protocol, HTTP, POST et le résultat de création comprend un deuxième code de statut HTTP.

6. Procédé selon l'une quelconque des revendications 1 à 5, dans lequel :
- le premier noeud de fonction de réseau et le deuxième noeud de fonction de réseau sont des noeuds de fonction de réseau d'un système de communication sans fil ; et/ou
- le deuxième noeud de fonction de réseau comprend un noeud d'exposition de réseau.

7. Procédé (400) au niveau d'un deuxième noeud de fonction de réseau, comprenant :
l'envoi (402), à un noeud de fonction de réseau de gestion unifiée de données, UDM, qui fournit un service Nudm_EventExposure, d'une première demande de mise à jour d'un abonnement d'événement à un ou plusieurs événements de surveillance ; et
la réception (404) d'une première réponse incluant un résultat de mise à jour depuis le noeud de fonction de réseau UDM.

8. Procédé selon la revendication 7, dans lequel la mise à jour de l'abonnement d'événement comprend au moins l'un parmi :
l'ajout d'un nouvel événement de surveillance dans l'abonnement d'événement,
la suppression d'un événement de surveillance de l'abonnement d'événement,
la mise à jour d'un attribut d'un événement de surveillance dans l'abonnement d'événement,
la mise à jour d'un temps d'expiration d'une option de rapport d'événement pour l'abonnement d'événement, et
la mise à jour d'un nombre maximal de rapports de l'option de rapport d'événement.

9. Procédé selon la revendication 7 ou 8, dans lequel :
- la première demande est une demande Hyper Text Transfer Protocol, HTTP, PATCH ou PUT ; et/ou
- le résultat de mise à jour comprend un premier code de statut HTTP ; et facultativement
dans lequel le premier code de statut HTTP comprend l'un parmi :
200 OK,
204 No Content,
403 Forbidden,
404 Not Found.

10. Procédé selon la revendication 9, dans lequel :
lorsque la mise à jour de l'abonnement d'événement est réussie, le premier code de statut HTTP est réglé en tant que 200 OK ou 204 No Content,
lorsque l'abonnement d'événement n'existe pas, le premier code de statut HTTP est réglé en tant que 404 Not Found, et
lorsque la mise à jour ne peut pas être acceptée, le premier code de statut HTTP est réglé en tant que 403 Forbidden.

11. Procédé selon l'une quelconque des revendications 7 à 10, dans lequel :
- la première demande inclut une identité d'équipement utilisateur représentant un équipement utilisateur, UE, unique ou un groupe d'UE ou n'importe quel UE, et une identité d'abonnement identifiant l'abonnement d'événement ; et/ou
- la première réponse inclut en outre l'abonnement d'événement mis à jour ou des informations d'erreur ; et/ou
- le procédé comprend en outre :
l'envoi (502) d'une deuxième demande pour créer l'abonnement d'événement au premier noeud de fonction de réseau ; et
la réception (504) d'une deuxième réponse incluant un résultat de création depuis le premier noeud de fonction de réseau ; et facultativement
dans lequel la deuxième demande est une demande Hyper Text Transfer Protocol, HTTP, POST et le résultat de création comprend un deuxième code de statut HTTP.

12. Procédé selon l'une quelconque des revendications 7 à 11, dans lequel :
- le premier noeud de fonction de réseau et le deuxième noeud de fonction de réseau sont des noeuds de fonction de réseau d'un système de communication sans fil ; et/ou
- le deuxième noeud de fonction de réseau comprend un noeud d'exposition de réseau.

13. Appareil (810) au niveau d'un noeud de fonction de réseau de gestion unifiée de données, UDM, qui fournit un service Nudm_EventExposure, comprenant :
un processeur (811) ; et
une mémoire (812) couplée au processeur (811), ladite mémoire (812) contenant des instructions exécutables par ledit processeur (811), de telle manière que ledit appareil (810) soit fonctionnel pour réaliser le procédé selon l'une quelconque des revendications 1 à 6.

14. Appareil (820) au niveau d'un deuxième noeud de fonction de réseau, comprenant :
un processeur (821) ; et
une mémoire (822) couplée au processeur (821), ladite mémoire (822) contenant des instructions exécutables par ledit processeur (821), de telle manière que ledit appareil (820) soit fonctionnel pour réaliser le procédé selon l'une quelconque des revendications 7 à 12.

15. Support de stockage lisible par ordinateur stockant des instructions qui, lorsqu'elles sont exécutées par au moins un processeur, amènent l'au moins un processeur à réaliser le procédé selon l'une quelconque des revendications 1 à 12.
